# EUROPEAN PATENT SPECIFICATION

(11) **EP 1 645 107 B1**
(45) Date of publication and mention of the grant of the patent: **26.05.2010**
(21) Application number: 04777159.7
(22) Date of filing: 28.06.2004
(51) Int. Cl.: H04M 3/22, H04L 29/06, H04L 29/08

(54) **PARENTAL MONITORING OF DIGITAL CONTENT**
KINDERSICHERUNG FÜR DIGITALEN INHALT
SURVEILLANCE PARENTALE DE CONTENU NUMERIQUE

(30) Priority: 26.06.2003 US 482632 P
(43) Date of publication of application: 12.04.2006
(73) Proprietor: Thomson Licensing, 92443 Issy-les-Moulineaux Cedex (FR)
(72) Inventor: TAYLOR, Jeffery, Lynn, Rushville, IN 46173 (US); TRZYBINSKI, Robert, Eugene, Granger, IN 46530 (US); TENEROWICZ, Bruce, Joseph, Noblesville, IN 46060 (US); BLAIR, Ronald Lynn, Liverpool, NY 13090 (US)
(74) Representative: Le Dantec, Claude
(86) International application number: PCT/US2004/020635
(87) International publication number: WO 2005/002180

(56) References cited:
- EP-A2- 1 119 120
- US-A1- 2002 051 518
- US-B1- 6 233 618

## Description

### FIELD OF THE INVENTION

The invention concerns the field of media object delivery, specifically the monitoring of delivered media objects to remote devices.

### BACKGROUND OF THE INVENTION

With the abundance of movie and music content available through a delivery mechanism as the Internet, parents have a difficult time knowing about what their children watch and listen to. Some of the material that children have access to may be sexual or offensive in nature, where parents may not want their children to be exposed to such material until their children are older. Moreover, parents may also want to restrict their children from being able to access websites and other communication media which may expose children to unsuitable material.

Some Internet content may be restricted by using software known as web browser filtering software. These filters prevent children from accessing different web sites by blocking the use of the Internet Protocol (IP) addresses that correspond to such sites. Typically, a filtering program has a list of restricted IP addresses or keywords that used as the basis for the blocking operation.

Parents may also monitor a child's activity with the Internet by using a program called an Internet monitor that keeps a log file of what websites a child has accessed while connected to the Internet. These log files may also log the keyboard input of the child during a session on the Internet.

These described methods of restricting access to resources on the Internet though involve some type of passive monitoring, where a program such as a web browser filter has already been instructed as how to restrict a child's access to the Internet. The software doesn't necessarily provide a parent the ability to monitor a child's actions in real time.

The US application US 2002/0078441 discloses a system for parental monitoring that uses multicast.

### SUMMARY OF THE INVENTION

A system and method for monitoring a user's actions while receiving a media object is disclosed. Information related to a multicast media object is related to an operator, in response to a parental monitoring query command. The operator then resolves such information to identify the media object from the multicast address and port used to receive the multicast media object. Additional program identifier information is optionally offered to identify additional aspects of the multicast media object.

The main invention is defined according to independent claims 1 and 7. Further embodiments are defined in the dependent claims.

### BRIEF DESCRIPTION OF THE DRAWINGS

FIG. 1 shows an exemplary embodiment of a set top box according to an embodiment of the present invention;
FIG. 2 shows a block diagram of two set top boxes communicating through a network connection, according to an embodiment of the present invention;
FIG. 3 shows a block diagram of two set top boxes communicating through a network connection and a gateway device, according to an embodiment of the present invention;
FIG. 4 shows a block diagram of two set top boxes communicating through a network connection to a head end device, according to an embodiment of the present invention;
FIG. 5 shows a block diagram of a set top box and a personal computer communicating to a head end device, according to an embodiment of the present invention;
FIG. 6 shows a flowchart of a method for querying a set top box using a parental monitor query command, according to an embodiment of the present invention;
FIG. 7 shows a flowchart of a method for querying a personal computer using a parental monitoring query command, according to an embodiment of the present invention.

### DETAILED DESCRIPTION OF THE EMBODIMENTS

The exemplary embodiments of the invention are described in view of a set top box capable of receiving and delivering media objects over an Internet Protocol based delivery system. Internet Protocol referring to a delivery system that receives media objects from a source such as a web site, media server, or other type resource available through an Internet connection. Typically, an IP enabled set top box is connected to the Internet through an connection such as a Digital Subscriber Line, a cable based connection, wireless connection, or other type of broadband connection. As used herein, the term "media object" includes audio, video, textual, multimedia data files, and streaming media files. Multimedia objects comprise any combination of text, image, video, and audio data. Streaming media comprises audio, video, multimedia, textual, and interactive data files that are delivered to a user via the Internet, satellite or other communications network environment and begin to play on the user's computer/ device before delivery of the entire file is completed. Media objects may be transmitted over any communications network including via the Internet, satellite (digital satellite system, digital video system-satellite), cable, digital subscriber line, T1 lines, wireless network, or other delivery systems capable of delivering media objects.

Examples of the content of media objects include songs, political speeches, news broadcasts, movie trailers, movies, television show broadcasts, radio broadcasts, financial conference calls, live concerts, web-cam footage, and other special events. Media objects are encoded in various formats including REALAUDIO^{®}, REALVIDEO^{®}, REALMEDIA^{®}, APPLE QUICKTIME^{®}, MICROSOFT WINDOWS^{®} MEDIA FORMAT, QUICKTIME^{®}, MPEG-2 (MOTION PICTURE EXPERTS GROUP) VIDEO COMPRESSION, MPEG-4 VIDEO AND/OR AUDIO COMPRESSION, JOINT VIDEO TEAM COMPRESSION FORMAT (MPEG-4 part 10 AVC, H.264), MPEG-2 LAYER III AUDIO, MP3^{®}. Typically, media objects are designated with extensions (suffixes) indicating compatibility with specific formats. For example, media objects (e.g., audio and video files) ending in one of the extensions, .ram, .rm, .rpm, are compatible with the REALMEDIA^{®} format. Some examples of file extensions and their compatible formats are listed in the Table 1. A more exhaustive list of media types, extensions and compatible formats may be found at http://www.bowers.cc/extensions2.htm.

**TABLE 1**

| Format | Extension |
|---|---|
| REALMEDIA^{®} | .ram, .rm, .rpm |
| APPLE | .mov, .qif |
| QUICKTIME^{®} | |
| MICROSOFT | .wma, .cmr, .avi |
| WINDOWS^{®} MEDIA | |
| PLAYER | |
| MACROMEDIA | .swf, .swl |
| FLASH | |
| MPEG | .mpg, .mpa, .mp1, .mp2 |
| MPEG-2 LAYER III | .mp3, .m3a, .m3u |
| Audio | |

The illustrated embodiments of the invention operate with media objects that contain video data for presenting a video presentation of "near to motion picture quality". Such media objects may be encoded in a variety of formats such as MPEG-2 (Motion Picture Standards Group Standard ISO/IEC 13818-1:2000) and ITU-T H.264/ MPEG AVC (ISO/IEC 14496-10), or may be uncompressed video.

In order to receive media objects, the IP enabled set top box joins or leaves an IP address called a multicasting group which has a corresponding media object transmitted on such an IP address. Multicasting groups also allow multiple set top boxes (multiple subscribers) to join the same IP address to receive a media object. In contrast, a non-multicasting group only allows for one set top box (as a single subscriber) to use an IP address at a time.

The multicasting operations described for the invention make use of a multicasting proxy compatible with the protocol described in the document entitled Host Extensions For IP Multicasting (Request For Comments (RFC) 988, Network Working Group, July 1986), although other multicasting protocols may be used in accordance with the principles of the present invention. For purposes of this invention, a host will be the party that is responsible for distributing a media object at a specified IP address. A client, such as an IP enabled set top box, accesses a desired media object from the host at the specified IP address. The host maintains the multicasting operations by using a data protocol such as Internet Group Management Protocol (IGMP, see RFC 988 Appendix I). The host may also act as a gateway device that acts as a head end device that communicates and negotiates resources from the Internet to the client. For example, the client uses a DSL or cable connection to communicate with a headend or Digital Subscriber Line Access Multiplier (DSLAM) as a host to transmit and receive resources from the Internet. It does not matter for the operation of this invention if multicasting devices are level 1 or level 2, as according to RFC 988.

The availability of a media object as being available at an IP address may either use a permanently assigned IP address or a temporary IP address. A program called a multicast agent is responible for keeping track of the members who join and leave a multicast group to receive a media object. The multicast agent may be in the same equipment that is used by a host, a router or any other networking capable equipment capable of maintance of IGMP based multicasting connections.

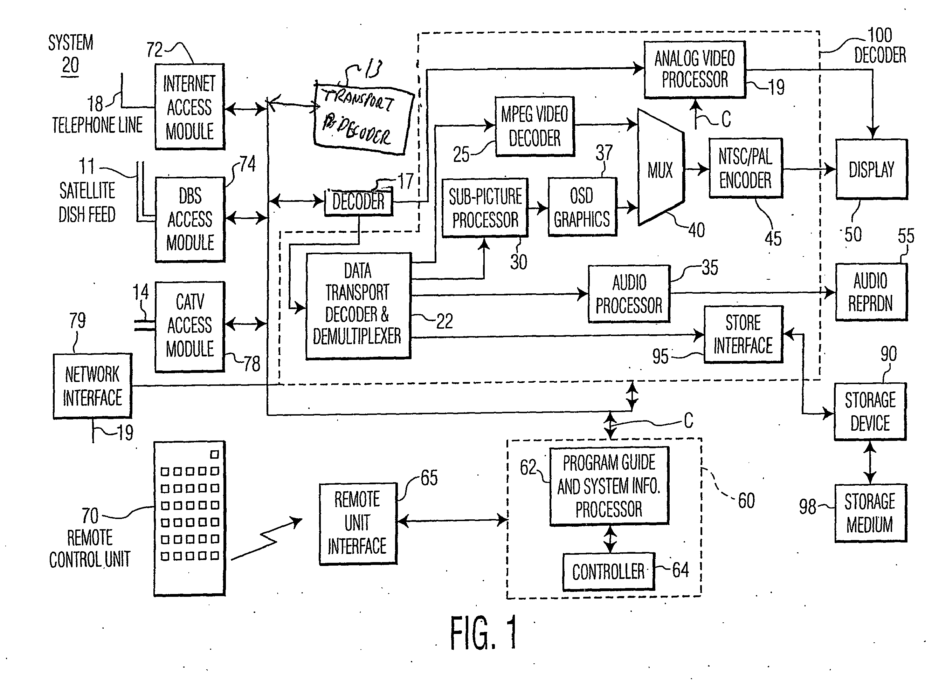

FIG. 1 is an exemplary embodiment of a set top box capable of receiving a transmitting IP based media objects from a network, such as the Internet. Specifically, system 20 receives data from a network connection 19 that receives IP based data through may be any type of network connection such as an Ethernet connection, IEEE-1394, USB, fiber optic, twisted wire, and the like. Network interface 79 coupled to network connection 19 receives a requested media object is received through network connection 19 through an Internet or network based connection using an IP based transport scheme such as TCP/IP, see Transmission Protocol Control, Request For Comments 793, Network Working Group, September 1981. The data representing the media object is processed by transport decoder 13 that handles the TCP/IP based communications between system 20 and resources available through the network connection. Transport decoder 13 outputs the received program representative multiplexed audio, video and data components to unit 17 that demultiplexed the received into audio, video and data components by unit 22 that are further processed by the other elements of decoder system 100. These other elements include video decoder 25, audio processor 35, sub-picture processor 30, on-screen graphics display generator (OSD) 37, multiplexer 40, NTSC encoder 45 and storage interface 95. In one mode, decoder 100 provides decoded data of media object for display and audio reproduction on units 50 and 55 respectively. In another mode, the transport stream from unit 17 is processed by decoder 100 to provide a datastream representative of media object for storage on storage medium 98 via storage device 90.

In other input data modes, units 72, 74, and 78 provide interfaces additional interfaces for Internet streamed video and audio data from telephone line 18, satellite data from feed line 11 and cable video from cable line 14, and video and guide data from network connection 19, respectively. The processed data from units 72, 74, and 78 is appropriately decoded by units 13 and 17 and is provided to decoder 100 for further processing in similar fashion to that described in connection with network interface 79.

A user selects for viewing either a media object or an on-screen menu, such as a program guide, by using a remote control unit 70. Processor 60 uses the selection information provided from remote control unit 70 via interface 65 to appropriately configure the elements of Figure 1 to receive a desired program channel for viewing. Processor 60 comprises processor 62 and controller 64. Unit 62 processes (i.e. parses, collates and assembles) program specific information including program guide and system information and controller 64 performs the remaining control functions required in operating decoder 100. Although the functions of unit 60 may be implemented as separate elements 62 and 64 as depicted in Figure 1, they may alternatively be implemented within a single processor. For example, the functions of units 62 and 64 may be incorporated within the programmed instructions of a microprocessor. Processor 60 configures processor 13, decoder 17 and decoder system 100 to demodulate and decode the input signal format and coding type. Units 13, 17 and sub-units within decoder 100 are individually configured for the input signal type by processor 60 setting control register values within these elements using a bi-directional data and control signal bus C.

The transport stream information provided to decoder 100 comprises data packets containing program channel data and program specific information. Unit 22 directs the program specific information packets to processor 60 that parses, collates and assembles this information into hierarchically arranged tables. Individual data packets comprising the User selected program channel are identified and assembled using the assembled program specific information. The program specific information contains conditional access, network information and identification and linking data enabling the system of Figure 1 to request a media object from a listed multicasting group at a IP multicast address and assemble data packets to form complete programs. The program specific information also contains ancillary program guide information (e.g. an Electronic Program Guide - EPG) and descriptive text related to media objects as well as data supporting the identification and assembly of this ancillary information.

In creating a listing of available media objects that are obtained through a multicast enabled media object, a service identifier such as an identifier compliant with a Session Description Protocol (SDP, see Request For Comments 2327, Network Working Group, April 1998) is used to identify attributes of a media object. The identifier contains attribute information such as the title of the media object, the multicast address or information that is used to identifier where the service may be obtained, the time the media object is available, the duration of the service, the transport protocol of the media object, and format of the media object, any metadata related to the title, author, and content of said media object, and the like. The service identifiers are made available directly to routers, hosts, clients, and other network enabled components that operate in view of multicasting services. These service identifiers may also be identified as "channels" which are mapped to multicast addressed as broadcast channels are mapped to specified broadcast frequencies. Preferably, the multicast address and port of a multicast media object is mapped to a "channel" in a channel file, see Table 2. This channel mapping information) is kept internally in a set top box in the case of the set top box operating as a thick client, and is kept externally in a middleware server or other type of database in the case where the set top box operates as a thin client

**TABLE 2**

| IP ADDRESS | PORT | CHANNEL |
|---|---|---|
| 129.111.111.234 | 10 | 2 |
| 48.231.114.123 | 10 | 3 |
| 101.111.145.55 | 20 | 5 |
| 77.123.204.164 | 25 | 105 |

In one embodiment of the present invention, a headend device such as a router or server operates as a network gateway device that enables a set top box as system 20 to communicate to the Internet. Service identifiers, when available, are broadcast through multicasting agents to the headend device that in turn communicate these identifiers to set top box 20. These service identifiers may then be collated by set top box 20 to form a program guide that a user selects a media object from. This information would be an addition to the IGMP based information that is typically communicated between a gateway device and a client such as set top box 20. In addition, service identifier information may be available from a server or router on the Internet that acts primarily for the purpose of listing multicast programming. Alternatively, service identifiers are transmitted as part of the auxiliary information that accompanies the audio and video data of a selected media object directly to set top box 20, without reliance on an Internet gateway device. Other mechanisms may be used to obtain service identifier information, in accordance with the principles of the present invention.

Set top box 20 is also enabled to operate with software that operates a program as an Internet browser such as Microsoft Internet Explorer 6.0 or MOZILLA to render data received from the Internet. Specifically, the browser software is used to operate with programs languages such as JavaScript or ActiveX Scripts. Preferably, middleware software is installed on set top box 20 to render and enable web pages, programs, and other Internet based programming that are rendered for display by NTSC/PAL encoder 45 and operated via a user control device such as remote control unit 70. The middleware software may optionally control the operation of set top box 20 to join/leave multicast services, render an electronic program guide using received program indicators, and negotiate IGMP information to and from a internet access gateway such as a router or server, as described above.

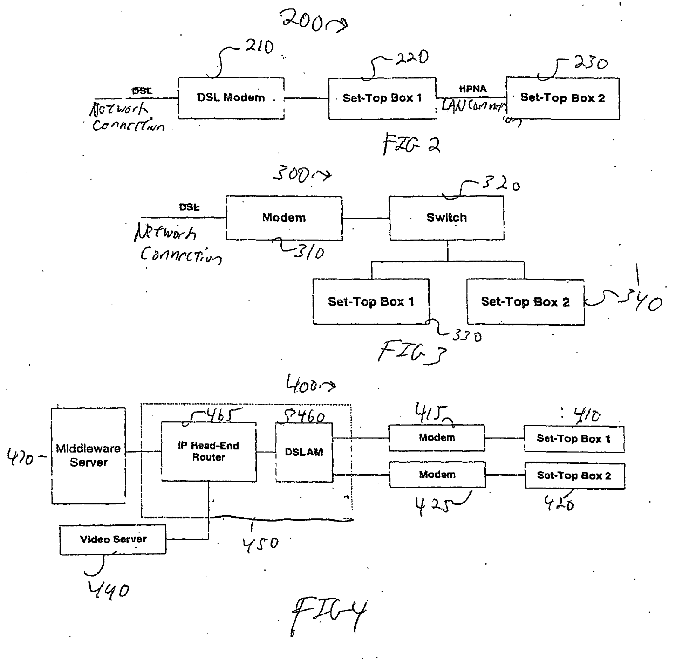

FIG. 2 is a block diagram of system 200 disclosing network enabled set top boxes communicating through a network connection. Specifically, the figure discloses a set top box 220 and 230 that receive media objects through a network connection by DSL modem 210. Set top boxes 220 and 230 are connected a local area network connection such as Ethernet or Home Phoneline Network Alliance (HPNA) connection. A user may select a media object by accessing a program guide, as disclosed above, and selecting the desired media object which is obtained from the associated multicast address through DSL modem 210.

In the present embodiment, the middleware software both in set top boxes 220 and 230 allows a parent or other user to observe what programming is being viewed with either set top box. For example, a parent operating set top box 220 (also referred to a monitoring device) desires to know what media object a child is watching via set top box 230 (also referred to a remote device). By operating a "parental monitoring option" via a menu or command on remote control unit 70, set top box 220 internally checks for program indicator information to determine what is being viewed on set top box 230.

Set top box 220, in this embodiment of the invention, controls the operation of DSL modem 210, as a router. Hence, set top box 220 has requests for joining, leaving, and querying multicasting services routed from set top box 230 through set top box 220 to DSL modem 210. All of these operations of set top box 230 are indicated in an IGMP table stored in set top box 220, this being called the thick client case. When a parent wants to know what is being viewed on set top box 230, the IGMP table is checked to indicate the media object currently being passed to set top box 230 at a specified multicasting address. Set top box 220 then joins the media object at the specified multicasting address, which is rendered for a parent to examine. When IGMP information is not available internally from set top box 220 about the media object being rendered on set top box 230, set top box 220 optionally contacts a server via the network connection to obtain such information, this being the thin client case.

In an optional embodiment to the invention, set top box 220, as a monitoring device, renders the media object being received by set top box 230, by joining the same multicast group. The media object may be rendered a full window, pics in pics window, in a web browser, in a media player, or in any other appropriate mechanism used to render media objects. The rendering of media object may apply to disclosed embodiments of the present invention.

FIG. 3 is a block diagram of a system 300 presenting network enabled set top boxes communicating through a network connection and a gateway device. System 300 discloses a switch 320 that controls modem 310 for communication to and from the Internet, via a network connection. In this example, set top box 330 and 340 are connected via a local area network connection to switch 320. When a parent operating set top box 330 wants to know about the media object a child is watching on set top 340, set top box 330 sends a request for information download of IGMP table information from set top 340. This information may be transmitted from switch 320 that retains information about all of the media objects being accessed by set top boxes on the local network, or directly from set top box 340. Set top box 330, upon receiving the requested information, then checks the IGMP table for the current multicast address of the media object being accessed by set top box 340 and renders such a media object. Optionally, the multicast address indicated in the IGMP table is checked against a channel file that is in set top box 330 or further channel identifier information is requested by set top box 330 through switch 320 to the Internet for the identification of the multicast address being accessed by set top box 340. This requested information is then delivered back to set top box 330, where the multicast media object may be joined at the specified multicasting address.

FIG. 4 is a block diagram of a system 400 presenting network enabled set top boxes communicating through a network connection to a headend device. Set top boxes 410 and 420 are connected to DSL modems 415 and 425, respectively. Head end device 450 communicates with modems 415 and 425 to transmit and receive information from the Internet. In this embodiment of the present invention, head end device 465 includes a DSLAM 460 and an IP head-end router 465 that resolves the requests for resources from the Internet received from set top boxes 410 and 420.

In this embodiment of the present invention, video server 490 streams a video based media object over a multicast address that is capable of being accessed via IP head-end router 465. Video server 490 is any mass storage device such as a RAID based server, capable of transmitting video based media objects and associated audio. Typically, a request for a media object (as identified from a received information identifier) is transmitted from set top box 410 or 420 through the network to head end device 450. IP head-end router 465 resolves the request, which is actually a multicast "join" command to the multicast address that corresponds to video server 490.

When a parent operating a set top box 410 wants to know what media object is being accessed on set top box 420, the parent issues queries set top box 410 using a parental monitoring command, in accordance with the technique described above. In one embodiment of the preset invention, set top box 410 does not have internal IGMP information identifying the media object being presented on set top box 420. Hence, the parental monitoring query command is forwarded through modem 415 and head end 450 to middleware server 470, which contains IGMP information listing which media objects are currently being accessed by set top boxes that are operated via head end 450. For example, middleware server 470 lists both set top box IP address information and the IP address of the multicast address being accessed by a corresponding set top box, although other information may be present. Once queried, middleware server 470 sends back a response to set top box 410 indicating information indicating the multicast address of the media object being accessed by set top box 420.

Alternatively, when a parental monitoring query is issued by set top box 410, IP head-end router 465 contains information listing the current IGMP join list of the IP addresses of the multicast media objects being accessed by set top boxes via router 465. The identification information and the permission information related to the operation of router 465 and set top box 420 are communicated back to set top box 410, as a simple network management protocol message (SNMP, see Simple Network Management Protocol, Request For Comments 1157, Network Working Group, May 1990). For example, the SNMP message returned to set top box 410 contains the IP address of set top box 420 and the multicast address of the media object being accessed via set top box 420. Once set top box 410 has the multicast address of the media object, it either uses internal information to resolve and render the media object at the address corresponding to video server 490, or set top box 410 accesses a database of program identifiers from router 465 or server 470 to resolve the content of the media object.

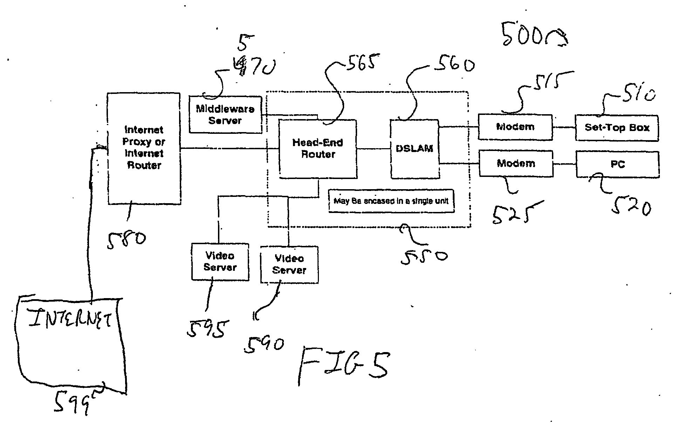

FIG. 5 is a block diagram of a system 500 of a network enabled set top box and a personal computer that communicate through a network connection to a headend device for a multicast media object. This embodiment of the invention is similar to the embodiment disclosed in FIG. 4, except a personal computer (PC) 520 has replaced set top box 420. Set top box 510 and PC 520 communicate through DSL modems 515 and 525, respectively, to head end device 550 to request and receive media objects from video servers 590 and 595.

When a parent operating set top box 510 wants to determine what is being viewed on PC 520, several different embodiments may be employed depending on how PC 520 accesses media objects. If PC 520 accesses media objects using a proxy, set top box 510 may query head end 550 for the HTTP access logs of the web pages being accessed by PC 520. If the HTTP information only returns IP address information, set top box 510 may resolve the IP address by performing a reverse Domain Name System (DNS) look up from internet proxy/router 580 that contains DNS information, as known in the art. Other IP addressable resources received via Internet 599, such as FTP servers and other media servers are determined in a similar manner, as described above.

In an alternative embodiment, when set top box 510 issues a parental monitoring query for the media objects being accessed via PC 520, the system is configured to return the browser history file of PC 520 to set top box 510. Specifically, PC 520 is operated with middleware that controls the websites and media objects that can be accessed by PC 520. The middleware also includes an option that uploads the history file to set top box 510 containing information such as the IP addresses and DNS names of resources accessed, the times and duration of such accesses, and any other related information. Optionally, PC 520 is configured with a filtering program to restrict the access of media objects, as determined in accordance with the preferences of the parent operating set top box 510. These access permissions may be remotely configured via set top box 510.

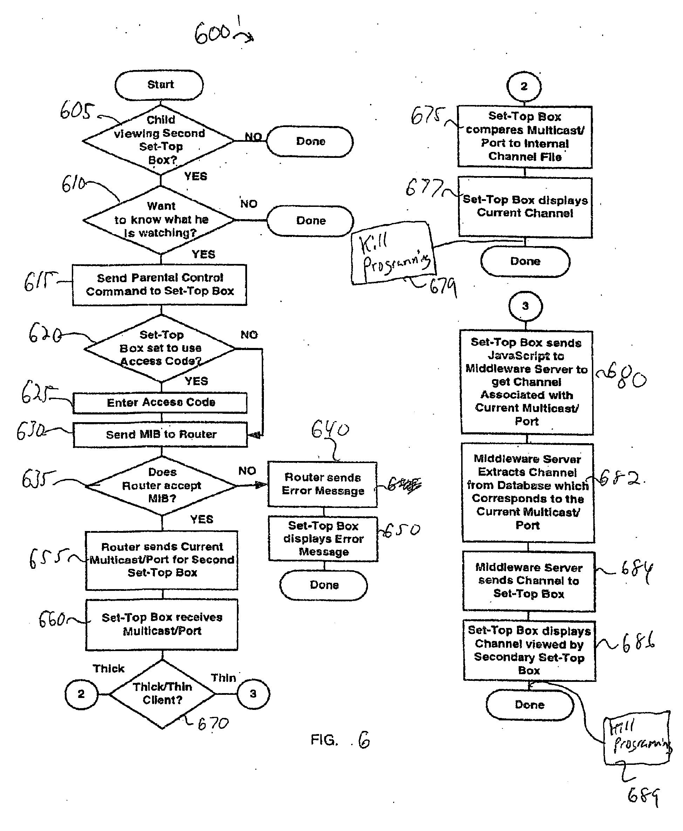

FIG. 6 is a flowchart of a method for a network enabled set top box to determine a media object being accessed on a second network enabled set top box. Method 600 describes an exemplary embodiment of a method used by the systems disclosed in Figs. 2, 3, and 4. Specifically, two set top boxes are used on a network, where a parent, or other operator using a first set top box, wants to know what is being accessed by a second set top box.

In steps 605, 610, and 615, an operator of a first set top box issues a parental monitoring query command. This command determines whether an operator wants to know if a second set top box is being used (step 605) and if the operator desires to know which media object is currently being watched (step 610). After issuing the command query command, step 620 determines whether an access code is required for an operator to access the information returned by a parental monitoring query. If an access code is required, an operator is required to enter such a code in step 625. After successful entry of an access code, or such a code is not required, step 630 proceeds where an SNMP based command or related type of command is issued to a router for returning the multicast address of a resource currently being viewed by the second set top box. This query command follows the Management Information Basis (MIB) aspect of the SNMP protocol, or other protocol used for operating the set top box.

If a router does not recognize such a query, step 640 proceeds where the router returns an error command that is rendered as an error message by the first set top box in step 650. Otherwise, in step 655, the router sends an error message back to the first set top box containing the current multicast address and port being accessed by the second set top box. This SNMP message is received by the first set top box in step 660 may also contain program identifier information, as described above.

Method 600 is bifurcated into two separate modes, depending on whether the first set top box operates as a thick or thin client, as shown in step 670. A thin client, as previously described, has to request information from an outside resource to map a returned multicast address and port to a corresponding media object. This mapping information, in an embodiment of the present invention, is kept a middleware server, and such information is returned to a requesting set top box in response to a query command. In contrast, a thick client contains middleware software that contains such mapping information without having to request such mapping information from an outside source.

Hence, when a first set top box operates as a thick client, the set top box accesses its own internal mapping information to map a multicast address and port to an internal channel file, in step 675. In step 677, the first set top box displays the media object identified by such mapping information by joining the media object identified at the specified multicast address. In contrast when the first set top box operates as a thin client in step 680, the first set top box transmits a JavaScript based query to a middleware server to identify a channel associated with the multicast address and port being accessed by a second set top box. The middleware server identifies the corresponding channel/media object in step 682 and transmits such information back to the first set top box in step 684. The first set top box then joins the multicast address associated with channel in step 686.

An optional step is provided as step 679 for a thick client and step 689 for a thin client, where the operator of the first set top box may kill the feed currently being received by the second set top box. Specifically, the operator issues a "kill" command that is transmitted from the first set top box to the router. The router, in term, issues a "leave" command to a host that is multicasting a media object to the second set top box. Hence, the second set top box is un-joined from multicast media object. Alternatively, the first set top box can request that the channel table that is used to map and deliver a multicast media object to the second set top box map to a second channel corresponding to a different multicasting address and port from the media object currently being obtained.

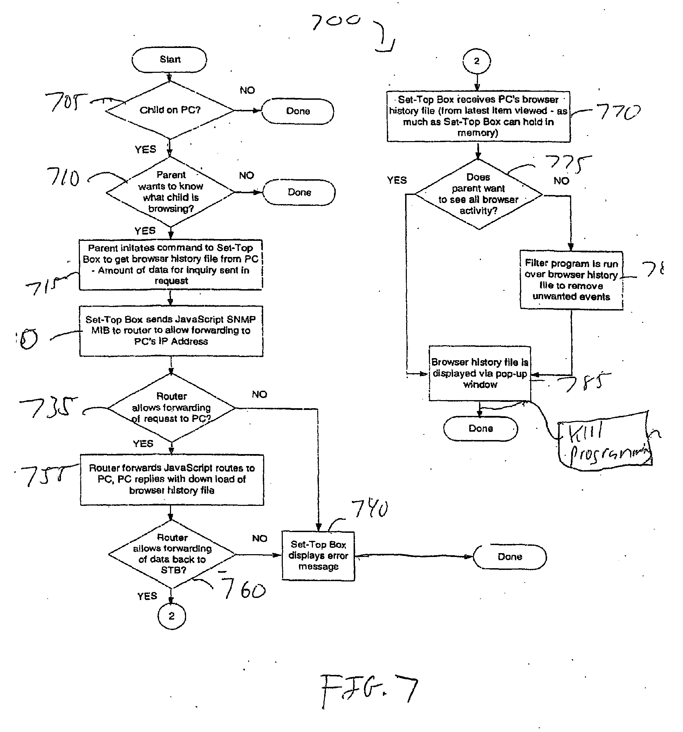

FIG. 7 is a flowchart of a method for a network enabled set top box to determine a media object being accessed by a personal computer on the same network. Method 700 describes an exemplary embodiment of a method used by the system disclosed in FIG. 5. Specifically, a set top box and a personal computer are used on a network, where a parent, or other operator using a first set top box, wants to know what is being accessed by the personal computer.

In steps 705, 710, and 715, an operator of a first set top box issues a parental monitoring query command. This command determines whether an operator wants to know if a personal computer is being used (step 705) and if the operator desires to know which media object is currently being watched (step 710). In step 715, the first set top box requests a browser history file from the personal computer in order to satisfy the parental monitoring query.

The query is forwarded as a SNMP MIB based command to a router that is used by the personal computer to access resources through the Internet, in step 730. In response to the query, the router forwards the request for the browser history file directly to the personal computer in step 735. If the personal computer does not allow such forwarding information, an error command is returned to the first set top box, in step 740. Otherwise, in step 755, the router forwards the query to the personal computer, which responds in kind with the browser history file that is forwarded back to the router. The router then determines if the history file can be returned to the first set top box in step 760. If not, an error message is returned to the set top box, which is displayed in step 740.

If the history file can be returned, the set top box receives the browser history file from the router in step 770. In step 775, the operator of the set top box is provided the option of seeing of all of the browser activity of the personal computer. If the operator decides not to see all of the browser activity, a filtering program may be applied to eliminate the listing of media objects or websites that are determined not to be interesting to the operator, in step 780. For example, a filter is configured to only show websites and media objects that are related to violence and sexual content, while content geared towards news and education are filtered out. Step 785 has the set top box displaying the browser history file either in a filtered or unfiltered form.

Step 789 is an optional step where the operator of the first set top box may kill the feed currently being received by a personal computer. Specifically, the operator issues a "kill" command that is transmitted from the set top box to the router. The router, in term, issues a "leave" command to a host that is multicasting a media object to the second set top box. Hence, the personal computer is un-joined from multicast media object. Alternatively, the first set top box can request that the channel table that is used to map and deliver a multicast media object to the personal computer map to a second channel corresponding to a different multicasting address and port from the media object currently being obtained.

The present invention may be embodied in the form of computer-implemented processes and apparatus for practicing those processes. The present invention may also be embodied in the form of computer program code embodied in tangible media, such as floppy diskettes, read only memories (ROMs), CD-ROMs, hard drives, high density disk, or any other computer-readable storage medium, wherein, when the computer program code is loaded into and executed by a computer, the computer becomes an apparatus for practicing the invention. The present invention may also be embodied in the form of computer program code, for example, whether stored in a storage medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose processor, the computer program code segments configure the processor to create specific logic circuits.

## Claims

1. A method for issuing a parental monitoring query command for determining a media object being rendered on a first device, comprising the steps of:
transmitting a query (615) requesting identification information for a media object being received by the first device in a local network;
information is received (660) by a second device in a local network in response to said query, wherein said information indicates a multicast address and port which is used to multicast said media object;
resolving said multicast address and port information (675, 680) to identify attributes of said media object;
using information received in response to said query and rendering said media object on said second device, which is the monitoring device, by joining a multicast address and port received corresponding to said media object;
**characterized by**:
issuing a kill command to a router coupled to said first and second device in said local network which in response to said kill command will kill the receiving of said media object by said first device.

2. The method of Claim 1, wherein said monitoring device uses a channel list that maps said multicast address and port to a channel.

3. The method of Claim 2, wherein a program guide is used to select media objects transmitted via a multicasted media object corresponding to said channel.

4. The method of Claim 1, wherein said media object is transmitted as part of an Internet Group Management (IGMP) compatible protocol multicasting service and program identification information is available for said media object as part of a Session Description (SDP) compatible protocol.

5. The method of Claim 4, wherein said resolving step uses IGMP data obtained from a middleware server.

6. The method of Claim 1, where said query additional comprises:
requesting a browser history log file, wherein said log file comprises the IP multicast addresses of media objects accessed by said remote device wherein each IP multicast address comprises an IP address and a port address.

7. An apparatus for issuing a parental monitoring query command for determining a media object being rendered on a device in a local network, comprising:
a network interface (79) that issues a query requesting identification information for a media object being received by said device;
a transport decoder (13) that processes information in response to said query, wherein said information indicates a multicast address and port which is used to multicast said media object; and
a data transport decoder (22) that resolves said multicast address and port information to identify attributes of said media object, wherein
said media object is rendered on said apparatus by joining said multicast address and port information corresponding to media object, where said apparatus is not the same as said device; and
**characterized in that**:
said apparatus issues a command to kill the receipt of said media object by said device, where said command is for receipt for a local router which is coupled to said device and said apparatus, where said router will terminate the playback of the media object for said device.

8. The apparatus of Claim 7, wherein said apparatus uses a channel list that maps said multicast address and port to a channel.

9. The apparatus of Claim 8, wherein a program guide is used to select media objects transmitted via a multicasted media object corresponding to said channel.

10. The apparatus of Claim 7, wherein said media object is transmitted as part of an Internet Group Management (IGMP) compatible protocol multicasting service and program identification information is available for said media object as part of a Session Description (SDP) compatible protocol.

11. The apparatus of Claim 7, where said query additional comprises:
requesting a browser history log file, wherein said log file comprises the IP multicast addresses of media objects accessed by said remote device wherein each IP multicast address comprises an IP address and a port address.

## Patentansprüche

1. Verfahren zum Ausgeben eines Kindersicherungs-Abfragebefehls zum Bestimmen eines Medienobjekts, das auf einer ersten Einrichtung gerendert wird, wobei das Verfahren die folgenden Schritte umfasst:
Senden einer Abfrage (615), die Identifizierungsinformationen für ein Medienobjekt anfordert, das von der ersten Einrichtung in einem lokalen Netz empfangen wird;
dass die Informationen in Reaktion auf die Abfrage von einer zweiten Einrichtung in einem lokalen Netz empfangen werden (660), wobei die Informationen eine Gruppenadresse und einen Port, der zum Sammelsenden des Medienobjekts verwendet wird, angeben;
Auflösen der Gruppenadressen- und Portinformationen (675, 680), um Attribute des Medienobjekts zu identifizieren;
Verwenden der in Reaktion auf die Anfrage empfangenen Informationen und Rendern des Medienobjekts auf der zweiten Einrichtung, die die Überwachungseinrichtung ist, durch Verbinden einer empfangenen Gruppenadresse und eines empfangenen Ports, die dem Medienobjekt entsprechen;
**gekennzeichnet durch**
Ausgeben eines Abbruchbefehls an einen Router, der mit der ersten und mit der zweiten Einrichtung in dem lokalen Netz gekoppelt ist, der das Empfangen des Medienobjekts **durch** die erste Einrichtung in Reaktion auf den Abbruchbefehl abbricht.

2. Verfahren nach Anspruch 1, bei dem die Überwachungseinrichtung eine Kanalliste verwendet, die die Gruppenadresse und den Port auf einen Kanal abbildet.

3. Verfahren nach Anspruch 2, bei dem ein Programmführer verwendet wird, um Medienobjekte auszuwählen, die über ein sammelgesendetes Medienobjekt dem Kanal entsprechend gesendet werden.

4. Verfahren nach Anspruch 1, bei dem das Medienobjekt als Teil eines Sammelsendedienstes eines Internetgruppenmanagement-kompatiblen (IGMPkompatiblen) Protokolls gesendet wird und Programmidentifizierungsinformationen für das Medienobjekt als Teil eines Sitzungsbeschreibungskompatiblen (SDP-kompatiblen) Protokolls verfügbar sind.

5. Verfahren nach Anspruch 4, bei dem der Auflösungsschritt IGMP-Daten verwendet, die von einem Middleware-Server erhalten werden.

6. Verfahren nach Anspruch 1, bei dem die Abfrage außerdem umfasst:
Anfordern einer Browser-Historienprotokolldatei, wobei die Protokolldatei die IP-Gruppenadressen von Medienobjekten umfasst, auf die durch die ferne Einrichtung zugegriffen wird, wobei jede IP-Gruppenadresse eine IP-Adresse und eine Portadresse umfasst.

7. Vorrichtung zum Ausgeben eines Kindersicherungs-Abfragebefehls zum Bestimmen eines Medienobjekts, das auf einer Einrichtung in einem lokalen Netz gerendert wird, wobei die Vorrichtung umfasst:
eine Netzschnittstelle (79), die eine Abfrage ausgibt, die Identifizierungsinformation für ein Medienobjekt anfordert, das von der Einrichtung empfangen wird; einen Transportdecoder (13), der in Reaktion auf die Abfrage Informationen verarbeitet, wobei die Informationen eine Gruppenadresse und einen Port, der zum Sammelsenden des Medienobjekts verwendet wird, angeben; und
einen Datentransportdecoder (22), der die Sammelsendeadressen- und Portinformationen auflöst, um Attribute des Medienobjekts zu identifizieren, wobei
das Medienobjekt auf der Vorrichtung **dadurch** gerendert wird, dass die Gruppenadressen- und Portinformationen, die dem Medienobjekt entsprechen, verbunden werden, wobei die Vorrichtung nicht dieselbe wie die Einrichtung ist, und
**dadurch gekennzeichnet, dass**
die Vorrichtung einen Befehl zum Abbrechen des Empfangs des Medienobjekts durch die Einrichtung ausgibt, wenn der Befehl zum Empfang für einen lokalen Router ist, der mit der Einrichtung und mit der Vorrichtung gekoppelt ist, wobei der Router die Wiedergabe des Medienobjekts für die Einrichtung beendet.

8. Vorrichtung nach Anspruch 7, bei der die Vorrichtung eine Kanalliste verwendet, die die Gruppenadresse und den Port auf einen Kanal abbildet.

9. Vorrichtung nach Anspruch 8, bei dem ein Programmführer verwendet wird, um Medienobjekte auszuwählen, die über ein sammelgesendetes Medienobjekt dem Kanal entsprechend gesendet werden.

10. Vorrichtung nach Anspruch 7, bei der das Medienobjekt als Teil eines Sammelsendedienstes eines Internetgruppenmanagement-kompatiblen (IGMPkompatiblen) Protokolls gesendet wird und Programmidentifizierungsinformationen für das Medienobjekt als Teil eines Sitzungsbeschreibungskompatiblen (SDP-kompatiblen) Protokolls verfügbar sind.

11. Vorrichtung nach Anspruch 7, bei der die Abfrage außerdem umfasst:
Anfordern einer Browser-Historienprotokolldatei, wobei die Protokolldatei die IP-Gruppenadressen von Medienobjekten umfasst, auf die durch die ferne Einrichtung zugegriffen wird, wobei jede IP-Gruppenadresse eine IP-Adresse und eine Portadresse umfasst.

## Revendications

1. Procédé permettant d'émettre une commande de requête de surveillance parentale pour déterminer un objet multimédia en cours de présentation sur un premier dispositif, comprenant les étapes consistant à :
transmettre une requête (615) demandant des informations d'identification sur un objet multimédia en cours de réception par le premier dispositif d'un réseau local ;
les informations sont reçues (660) par un second dispositif d'un réseau local en réponse à ladite requête, dans lequel lesdites informations indiquent une adresse et un port de multidiffusion qui sont utilisés pour une multidiffusion dudit objet multimédia ;
résoudre lesdites informations d'adresse et de port de multidiffusion (675, 680) pour identifier des attributs dudit objet multimédia ;
utiliser les informations reçues en réponse à ladite requête et présenter ledit objet multimédia sur ledit second dispositif, qui constitue le dispositif de surveillance, en regroupant une adresse et un port de multidiffusion reçus correspondant audit objet multimédia ;
**caractérisé par** :
une émission d'une commande kill vers un routeur couplé auxdits premier et second dispositifs dudit réseau local qui en réponse à ladite commande kill supprime la réception dudit objet multimédia par ledit premier dispositif.

2. Procédé selon la revendication 1, dans lequel ledit dispositif de surveillance utilise une liste de canaux qui mappe lesdits adresse et port de multidiffusion vers un canal.

3. Procédé selon la revendication 2, dans lequel un guide de programme est utilisé pour sélectionner des objets multimédia transmis via un objet multimédia multidiffusé correspondant audit canal.

4. Procédé selon la revendication 1, dans lequel ledit objet multimédia est transmis comme faisant partie d'un service de multidiffusion avec protocole compatible IGMP (Internet Group Management) et des informations d'identification de programme sont disponibles sur ledit objet multimédia comme faisant partie d'un protocole compatible SDP (Session Description).

5. Procédé selon la revendication 4, dans lequel ladite étape de résolution utilise des données IGMP obtenues d'un serveur intergiciel.

6. Procédé selon la revendication 1, où ladite requête comprend en outre :
une demande d'un fichier journal de l'historique du navigateur, dans lequel ledit fichier journal comprend les adresses de multidiffusion IP d'objets multimédia accédés par ledit dispositif à distance dans lequel chaque adresse de multidiffusion IP comprend une adresse IP et une adresse de port.

7. Appareil permettant d'émettre une commande de requête de surveillance parentale pour déterminer un objet multimédia présenté sur un dispositif d'un réseau local, comprenant :
une interface réseau (79) qui émet des informations d'identification de demande de requête pour un objet multimédia en cours de réceptions par ledit dispositif ;
un décodeur (13) de transport qui traite les informations en réponse à ladite requête, dans lequel lesdites informations indiquent une adresse et un port de multidiffusion qui sont utilisés pour une multidiffusion dudit objet multimédia ; et
un décodeur (22) de transport de données qui résout lesdites informations d'adresse et de port de multidiffusion pour identifier des attributs dudit objet multimédia, dans lequel
ledit objet multimédia est présenté sur ledit appareil en regroupant lesdites informations d'adresse et de port de multidiffusion correspondant à l'objet multimédia, où ledit appareil n'est pas le même que ledit dispositif ; et
**caractérisé en ce que :**
ledit appareil émet une commande pour supprimer la réception dudit objet multimédia par ledit dispositif, où ladite commande permet une réception sur un routeur local qui est couplé audit dispositif et audit appareil, où ledit routeur terminera la lecture de l'objet multimédia pour ledit dispositif.

8. Appareil selon la revendication 7, dans lequel ledit appareil utilise une liste de canaux qui mappe lesdits adresse et port de mutltidiffusion vers un canal.

9. Appareil selon la revendication 8, dans lequel un guide de programme est utilisé pour sélectionner des objets multimédia transmis via un objet multimédia multidiffusé correspondant audit canal.

10. Appareil selon la revendication 7, dans lequel ledit objet multimédia est transmis comme faisant partie d'un service de multidiffusion avec protocole compatible IGMP (Internet Group Management) et des informations d'identification de programme sont disponibles pour ledit objet multimédia comme faisant partie d'un protocole compatible SDP (Session Description).

11. Appareil selon la revendication 7, où ladite requête supplémentaire comprend en outre :
une demande d'un fichier journal de l'historique du navigateur, dans lequel ledit fichier journal comprend les adresses de multidiffusion IP des objets multimédia accédés par ledit dispositif à distance dans lequel chaque adresse de multidiffusion IP comprend une adresse IP et une adresse de port.
